# EUROPÄISCHE PATENTSCHRIFT

(11) **EP 1 628 382 B1**
(45) Veröffentlichungstag und Bekanntmachung des Hinweises auf die Patenterteilung: **28.11.2007**
(21) Anmeldenummer: 05107339.3
(22) Anmeldetag: 10.08.2005
(51) Int. Cl.: H02K 3/51, H02K 3/38

(54) **Rotor für einen Generator, insbesondere einen Turbogenerator grosser Leistung**
Rotor for a generator, in particular rotor for a high-power turbogenerator
Rotor pour un générateur, notamment rotor pour un turbo-alternateur de grande puissance

(30) Priorität: 19.08.2004 DE 102004040184
(43) Veröffentlichungstag der Anmeldung: 22.02.2006
(73) Patentinhaber: Alstom Technology Ltd, 5400 Baden (CH)
(72) Erfinder: Holmes, Andrew John, 5405 Baden-Dättwil (CH); Klein, Georg Stephan, 5430 Wettingen (CH); Lindh, John, 5300 Turgi (CH); Mayor, Kevin, 5413 Birmenstorf (CH); Rotzinger, Ralf, 79730 Murg-Niederhof (DE)

(56) Entgegenhaltungen:
- DE-A1- 1 488 456
- DE-A1- 2 040 926
- DE-A1- 10 119 989
- US-A- 4 143 290

## Beschreibung

### TECHNISCHES GEBIET

Die vorliegende Erfindung bezieht sich auf das Gebiet der elektrischen Generatoren. Sie betrifft einen Rotor für einen Generator, insbesondere einen Turbogenerator grosser Leistung gemäss dem Oberbegriff des Anspruchs 1.

### STAND DER TECHNIK

Ein solcher Rotor ist z.B. aus der Druckschrift DE-A1-101 19 989 der Anmelderin bekannt.

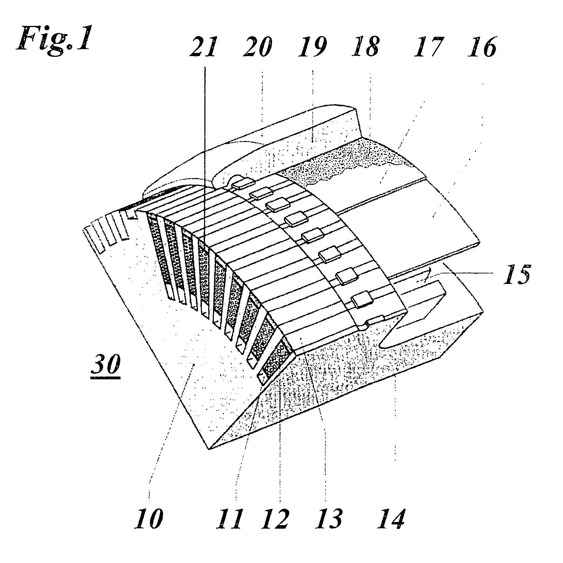

Ein Turbogenerator umfasst als wesentliche Elemente einen um eine Achse (14 in Fig. 1) drehbar gelagerten Rotor, der konzentrisch von einem Stator umschlossen ist. Beispiele derartiger Turbogeneratoren und deren Rotoren lassen sich aus dem Artikel von K. Weigelt, "Konstruktionsmerkmale grosser Turbogeneratoren", ABB Technik 1/1989, S. 3-14, entnehmen. Der Rotor eines solchen Turbogenerators hat im mittleren Bereich einen Rotorballen mit vergrössertem Durchmesser. Das eine Ende eines solchen Rotorballens ist in Fig. 1 dargestellt. Aussen am Rotorballen 10 des Rotors 30 sind axiale Nuten 11 zur Aufnahme von Leiterstäben 12 einer Rotorwicklung angebracht. Die Leiterstäbe 12 sind in den Nuten 11 mittels eingeschobener Keile (Verschlusskeile) 13 fixiert. Zwischen dem obersten Leiterstab einer Nut und dem zugehörigen Verschlusskeil ist eine Isolation 21 vorgesehen. Die Leiterstäbe 12 sind ausserhalb des Rotorballens 10 unter Bildung eines Rotorwickelkopfes 15 untereinander elektrisch verbunden. Der Rotorwickelkopf 15 ist im allgemeinen durch einen ihn umschliessenden Kappenring 19 gegen die beim Betrieb des Generators auftretenden Fliehkräfte gehalten. Der Kappenring 19 bildet zusammen mit einer (in Fig. 1 nicht dargestellten) senkrecht zur Achse 14 orientierten Kappenplatte die Rotorkappe 20.

Zwischen dem Rotorwickelkopf 15 und dem Kappenring 19 ist eine elektrisch isolierende Schicht aufgebracht, die sogenannte Kappenisolation 16. Die Kappenringe 19 werden gewöhnlich auf den Rotorkörper aufgeschrumpft und dabei im heissen Zustand über die Kappenisolation 16 geschoben. Im Falle von mechanisch und thermisch empfindlichen Kappenisolationen 16 wird eine Lage warmfester Kappenbleche 17 zwischen Kappenisolation 16 und Kappenring 19 angebracht. Zwischen Kappenblech 17 und Kappenring 19 kann ein Gleitmittel 18 vorgesehen werden. Die Kappenisolation 16 muss im Betrieb die durch die Fliehkraft und thermische Dehnung der Wicklung auftretenden Kräfte aufnehmen und an die Rotorkappe 20 weitergeben.

Damit die Rotorwicklung durchgehend isoliert ist, muss die Isolation 21 in den Nuten 11 ausserhalb des Rotorballens 10 in die Kappenisolation übergehen. Bisher wurde dieser Übergang bei Rotoren verschiedener Baureihen auf zwei verschiedene Arten realisiert:

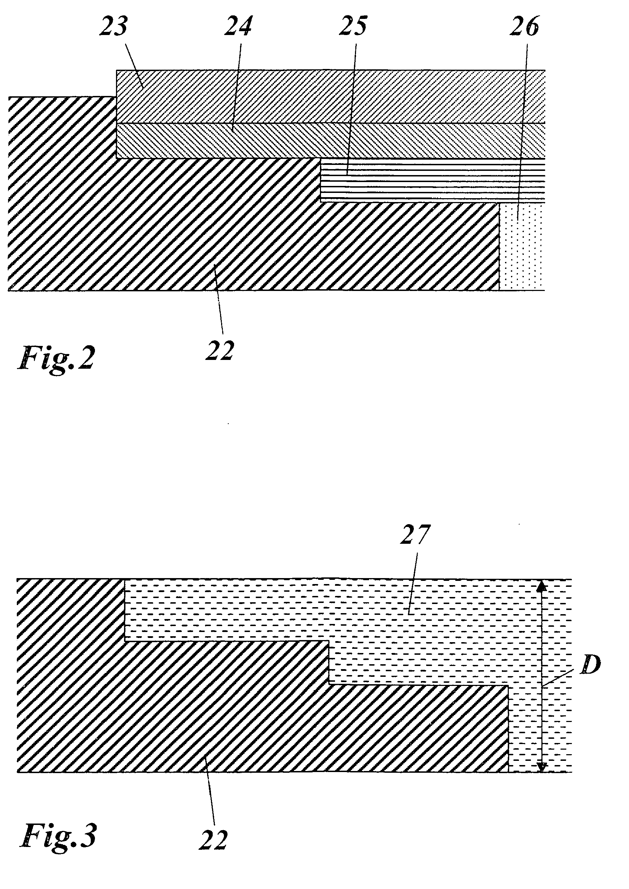

Die Baureihen mit der einen Art von Übergang zeichnen sich durch ausgesprochen dünne Wicklungsisolationen aus. Um dennoch hohe Prüfspannungen zu ermöglichen, wurden besondere konstruktive Vorkehrungen getroffen, um genügend grosse Kriechwege zu erhalten. Am Ende des Rotorballens (Übergang zwischen Aktivteil und Rotorwickelkopf) werden die als Isolation zwischen oberstem Leiterstab und Verschlusskeil eingesetzten Deckkanäle (22 in Fig. 2) mit axial gestuften Enden ausgeführt. In die Stufen greifen im Rotorwickelkopf Isolierlagen 23, 24, 25, 26 aus dünnem Isoliermaterial (Fig. 2). Vorteil dieser Art von Übergang ist eine dünne Isolation, d.h., der Platzbedarf für elektromagnetisch inaktives Material ist gering. Nachteile dieser Art von Übergang sind eine geringe Steifigkeit der Kappenisolation und die Notwendigkeit eines Kappenblechs zum mechanischen Schutz der Isolation.

Die Baureihen mit der anderen Art von Übergang sind eher dadurch gekennzeichnet, dass die Isolationsdicke so bemessen ist, dass der Kriechweg über die Isolationsdicke gebildet wird. Bei der Kappenisolation besteht eine Ausführung aus zwei Isolationssegmenten (Halbschalen), welche den Wickel kopf umschliessen und gegen die Rotorkappe isolieren. Der Stoss zur Isolation des Aktivteils im Rotorballen erfolgt dabei stumpf. Vorteile dieser Art von Übergang sind ein einfaches Design, eine hohe Steifigkeit und ein Verzicht auf die Verwendung von Kappenblechsegmenten. Nachteil dieser Art von Übergang ist eine dicke Isolation, d.h. ein grösserer Platzbedarf für elektromagnetisch inaktives Material.

### DARSTELLUNG DER ERFINDUNG

Es ist Aufgabe der Erfindung, einen Rotor der eingangs genannten Art anzugeben, der sich bei geringem Platzbedarf für elektromagnetisch inaktives Isolationsmaterial durch eine hohe mechanische, thermische und elektrische Spannungsfestigkeit und eine problemlose Kappenmontage bei gleichzeitig vereinfachtem Aufbau auszeichnet.

Die Aufgabe wird durch die Gesamtheit der Merkmale des Anspruchs 1 gelöst. Der Kern der Erfindung besteht darin, dass die Deckkanäle (22) an den Enden des Rotorballens (10) mit axial gestuften Enden ausgeführt sind, dass die Kappenisolation einen Ring oder eine Mehrzahl von Kappenisolationssegmenten (27) umfasst, welche zum Rotorballen (10) hin so ausgeführt sind, dass sie auf die axial gestuften Enden der Deckkanäle (22) passen, und dass die Rotorkappe (20) direkt über die Kappenisolation geschoben ist.

Durch diese Art der Kappenisolation werden folgenden Vorteile erreicht:
- Eine geringe Dicke der Isolation in radialer Richtung;
- eine hohe elektrische Spannungsfestigkeit;
- eine hohe Steifigkeit in radialer Richtung;
- eine geringe Anzahl von Bauteilen, und
- eine ausreichende mechanische Festigkeit für die Kappenmontage (Aufschrumpfen)

Eine bevorzugte Ausgestaltung der Erfindung zeichnet sich dadurch aus, dass der Kappenisolationsring bzw. die Kappenisolationssegmente eine Dicke aufweisen, welche gleich oder nur unwesentlich grösser ist, als die Dicke der Deckkanäle.

Eine weitere bevorzugte Ausgestaltung ist dadurch gekennzeichnet, dass der Kappenisolationsring bzw. die Kappenisolationssegmente in ihrer thermischen Beständigkeit so bemessen sind, dass sie den bei einem thermischen Aufschrumpfen der Rotorkappen auf den Rotorballen auftretenden Temperaturen ohne Beeinträchtigung ihrer Funktion standhalten.

Wenn Kappenisolationssegmente eingesetzt werden, sind diese vorzugsweise durch geeignete Fixierungselemente tangential geführt.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer teilweise geschnittenen perspektivischen Darstellung das eine Ende des Rotorballens mit anschliessendem Rotorwickelkopf und Rotorkappe eines Rotors nach dem Stand der Technik;
- Fig. 2: im Längsschnitt den Übergang von einem axial gestuften dünnen Deckkanal auf eine mehrlagige dünne Kappenisolation, wie er bereits in der Praxis eingesetzt worden ist;
- Fig. 3: in der zu Fig. 2 vergleichbaren Darstellung den Übergang von einem axial gestuften dünnen Deckkanal auf ein radial steifes Kappenisolationselement gleicher Dicke gemäss einem bevorzugten Ausführungsbeispiel der Erfindung; und
- Fig. 4: in einer zu Fig. 1 vergleichbaren Darstellung einen Rotor gemäss einem bevorzugten Ausführungsbeispiel der Erfindung.

### WEGE ZUR AUSFÜHRUNG DER ERFINDUNG

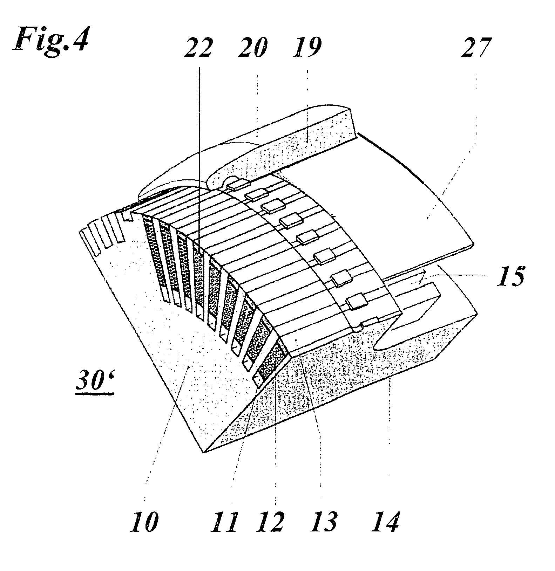

In Fig. 3 ist in einer zu Fig. 2 vergleichbaren Darstellung der Übergang von einem axial gestuften Deckkanal 22 auf ein radial steifes Kappenisolationselement 27 annähernd gleicher Dicke D gemäss einem bevorzugten Ausführungsbeispiel der Erfindung wiedergegeben. Fig. 4 zeigt in einer zu Fig. 1 vergleichbaren Darstellung einen Rotor 30' gemäss einem bevorzugten Ausführungsbeispiel der Erfindung. Die an die Deckkanäle 22 stufig anschliessenden Kappenisolationssegmente 27 liegen hierbei direkt, d.h. ohne dazwischen liegende, schützende Kappenbleche, unter dem Kappenring 19 der Rotorkappe 20. Anstelle der Kappenisolationssegmente 27 kann aber auch ein einteiliger, geschlitzter Kappenisolationsring eingesetzt werden.

Die Kappenisolationselemente 27 sind z.B. als Halbschalen ausgebildet. Sie zeichnen sich durch die folgenden Merkmale und Vorteile aus:
- Die Kappenisolationssegmente haben eine hohe radiale Steifigkeit.
- Die Kappenisolationssegmente haben eine hohe tangentiale Steifigkeit.
- Die Kappenisolationssegmente sind zum Rotorballen hin so ausgeführt, dass sie auf axial gestufte Deckkanäle passen.
- Die Kappenisolationselemente sind in ihrer Festigkeit so bemessen, dass sie dieselbe Dicke wie die Deckkanäle oder eine nur unwesentlich grössere Dicke aufweisen.
- Die Kappenisolationssegmente sind in ihrer thermischen Beständigkeit so bemessen, dass sie die bei der Kappenmontage auftretenden Temperaturen vertragen und metallische Kappenblechsegmente unnötig machen. Im Allgemeinen finden hierfür faserverstärkte Kunststoffe mit hochwarmfesten Harzen Verwendung. Die thermische Dauerfestigkeit genügt der thermischen Isolationsklasse des Generators. Für die Kappenmontage und -demontage müssen mehrmals während weniger Stunden Temperaturen von ca. 350°C unbeschadet aufgenommen werden können.
- Die Kappenisolationssegmente können gegebenenfalls nach einer Kappendemontage wiederverwendet werden.
- Die Kappenisolationssegmente können durch geeignete Fixierungselemente (z.B. Finger in Lüftungsnuten bzw. Stifte in Distanzklötzen) tangential geführt sein.

### BEZUGSZEICHENLISTE

- 10: Rotorballen
- 11: Nut
- 12: Leiterstab (Rotorwicklung)
- 13: Keil
- 14: Achse
- 15: Rotorwickelkopf
- 16: Kappenisolation
- 17: Kappenblech bzw. Kappenblechsegment
- 18: Gleitmittel
- 19: Kappenring
- 20: Rotorkappe
- 21: Isolation
- 22: Deckkanal
- 23: Kappenblech bzw. Kappenblechsegment
- 24,..,26: Isolierlage (Kappenisolation)
- 27: Kappenisolationssegment
- 30,30': Rotor
- D: Dicke (Kappenisolationssegment)

## Patentansprüche

1. Rotor (30') für einen Generator, insbesondere einen Turbogenerator grosser Leistung, welcher Rotor (30') in einem Rotorballen (10) axial verlaufende Nuten (11) mit eingelegten Leiterstäben (12) aufweist, die in den Nuten (11) mittels Keilen (13) radial abgestützt und an den Enden des Rotorballens (10) jeweils in einem Rotorwickelkopf (15) untereinander elektrisch verbunden sind, wobei die Rotorwickelköpfe (15) jeweils durch eine über das Ende des Rotorballens (10) geschobene Rotorkappe (20) abgedeckt sind, und wobei in den Nuten (11) jeweils zwischen dem obersten Leiterstab und dem Keil (13) ein elektrisch isolierender Deckkanal (22) angeordnet ist, an welchen ausserhalb des Rotorballens (10) eine zwischen dem Rotorwickelkopf (15) und der Rotorkappe (20) angeordnete Kappenisolation (16) anschliesst, **dadurch gekennzeichnet, dass** die Deckkanäle (22) an den Enden des Rotorballens (10) mit axial gestuften Enden ausgeführt sind, dass die Kappenisolation einen Ring oder eine Mehrzahl von Kappenisolationssegmenten (27) umfasst, welche zum Rotorballen (10) hin so ausgeführt sind, dass sie auf die axial gestuften Enden der Deckkanäle (22) passen, und dass die Rotorkappe (20) direkt über die Kappenisolation geschoben ist.

2. Rotor nach Anspruch 1, **dadurch gekennzeichnet, dass** der Kappenisolationsring bzw. die Kappenisolationssegmente (27) eine Dicke (D) aufweisen, welche gleich oder nur unwesentlich grösser ist, als die Dicke der Deckkanäle (22).

3. Rotor nach einem der Ansprüche 1 oder 2, **dadurch gekennzeichnet, dass** der Kappenisolationsring bzw. die Kappenisolationssegmente (27) in ihrer thermischen Beständigkeit so bemessen sind, dass sie den bei einem thermischen Aufschrumpfen der Rotorkappen (20) auf den Rotorballen (10) auftretenden Temperaturen ohne Beeinträchtigung ihrer Funktion standhalten.

4. Rotor nach einem der Ansprüche 1 bis 3, **dadurch gekennzeichnet, dass** Kappenisolationssegmente (27) vorgesehen sind, und dass die Kappenisolationssegmente (27) durch geeignete Fixierungselemente tangential geführt sind.

## Claims

1. Rotor (30') for a generator, in particular a high-power turbogenerator, which rotor (30') has slots (11) which run axially in a rotor body (10) and have conductor bars (12) inserted in them, which are supported radially in the slots (11) by means of wedges (13) and are electrically connected to one another at the ends of the rotor body (10) in each rotor end winding (15), with the rotor end windings (15) each being covered by a rotor cap (20) which is pushed over the end of the rotor body (10), and with an electrically insulating covering channel (22) being arranged in each of the slots (11) between the uppermost conductor bar and the wedge (13) and being connected outside the rotor body (10) to cap insulation (16) which is arranged between the rotor end winding (15) and the rotor cap (20), **characterized in that** the covering channels (22) are formed with axially stepped ends at the ends of the rotor body (10), **in that** the cap insulation comprises a ring or a plurality of cap insulation segments (27) which are formed towards the rotor body (10) such that they fit onto the axially stepped ends of the covering channels (22), and **in that** the rotor cap (20) is pushed directly over the cap insulation.

2. Rotor according to Claim 1, **characterized in that** the cap insulation ring or the cap insulation segments (27) has or have a thickness (D) which is equal to or only insignificantly greater than the thickness of the covering channels (22).

3. Rotor according to one of Claims 1 or 2, **characterized in that** the cap insulation ring or the cap insulation segments (27) is or are designed to have a thermal resistance such that it or they withstands or withstand the temperatures which occur while the rotor caps (20) are being thermally shrunk onto the rotor body (10) without adversely affecting their function.

4. Rotor according to one of Claims 1 to 3, **characterized in that** the cap insulation segments (27) are provided, and **in that** the cap insulation segments (27) are guided tangentially by suitable fixing elements.

## Revendications

1. Rotor (30') pour un générateur, notamment un turbogénérateur de grande puissance, lequel rotor (30') présente des rainures (11) s'étendant axialement dans un rotor sphérique (10), avec des barres conductrices (12) incorporées qui sont supportées radialement dans les rainures (11) au moyen de clavettes (13) et qui sont connectées électriquement les unes aux autres aux extrémités du rotor sphérique (10) à chaque fois dans une tête d'enroulement de rotor (15), les têtes d'enroulement de rotor (15) étant à chaque fois recouvertes par un chapeau de rotor (20) poussé par-dessus l'extrémité du rotor sphérique (10), et un canal de recouvrement (22) électriquement isolant étant disposé dans les rainures (11) à chaque fois entre la barre conductrice supérieure et la clavette (13), une isolation de chapeau (16) disposée entre la tête d'enroulement de rotor (15) et le chapeau de rotor (20) se raccordant à ce canal de recouvrement en dehors du rotor sphérique (10), **caractérisé en ce que** les canaux de recouvrement (22) sont réalisés aux extrémités du rotor sphérique (10) avec des extrémités axialement étagées, **en ce que** l'isolation de chapeau comprend une bague ou une pluralité de segments d'isolation de chapeau (27) qui sont réalisés en direction du rotor sphérique (10) de telle sorte qu'ils passent sur les extrémités axialement étagées des canaux de recouvrement (22) et **en ce que** le chapeau de rotor (20) est poussé directement sur l'isolation de chapeau.

2. Rotor selon la revendication 1, **caractérisé en ce que** la bague d'isolation de chapeau ou les segments d'isolation de chapeau (27) présentent une épaisseur (D) qui est identique ou seulement très légèrement supérieure à l'épaisseur des canaux de recouvrement (22).

3. Rotor selon l'une quelconque des revendications 1 ou 2, **caractérisé en ce que** la bague d'isolation de chapeau ou les segments d'isolation de chapeau (27) sont dimensionnés en termes de résistance thermique de telle sorte qu'ils résistent aux températures produites lors d'un retrait thermique du chapeau de rotor (20) sur le rotor sphérique (10) sans affecter leur fonction.

4. Rotor selon l'une quelconque des revendications 1 à 3, **caractérisé en ce que** l'on prévoit des segments d'isolation de chapeau (27) et **en ce que** les segments d'isolation de chapeau (27) sont guidés tangentiellement par des éléments de fixation appropriés.
